# EUROPÄISCHE PATENTSCHRIFT

(11) **EP 0 628 436 B1**
(45) Veröffentlichungstag und Bekanntmachung des Hinweises auf die Patenterteilung: **23.10.1996**
(21) Anmeldenummer: 93121166.8
(22) Anmeldetag: 31.12.1993
(51) Int. Cl.: B60D 1/60

(54) **Vorrichtung zur Diebstahlsicherung von Kfz-Anhängern**
Theft protection device for a motor vehicle trailer
Dispositif de protection antivol d'une remorque de véhicule à moteur

(30) Priorität: 11.06.1993 EP 93109422
(43) Veröffentlichungstag der Anmeldung: 14.12.1994
(73) Patentinhaber: Bullinger, Rudolf, D-86156 Augsburg (DE)
(72) Erfinder: Bullinger, Rudolf, D-86156 Augsburg (DE)
(74) Vertreter: Munk, Ludwig, Dipl.-Ing.

(56) Entgegenhaltungen:
- DE-A- 3 502 701
- DE-A- 3 535 195
- DE-C- 3 731 264
- DE-U- 8 519 623
- GB-A- 2 210 343

## Beschreibung

Die Erfindung betrifft eine Vorrichtung zur Diebstahlsicherung von Kfz-Anhängern, die mit einer am Ende einer Zugdeichsel mittels wenigstens einer Durchgangsschraubverbindung befestigten, einen mittels eines schwenkbaren Handhebels betätigbaren Kupplungsmechanismus aufweisenden Zugkugelkupplung an ein Zugfahrzeug anhängbar sind, wobei wenigstens ein Ende der Durchgangsschraubverbindung in einem diese gegen Entfernbarkeit von der Deichsel sichernden Abdeckelement aufnehmbar ist, das mittels eines absperrbaren Schlosses entnahmesicher am Kupplungsgehäuse festlegbar und bei geöffnetem Schloß entnehmbar ist, und wobei der Kupplungmechanismus zumindest teilweise blockierbar ist.

Eine Vorrichtung dieser Art ist aus der **DE-C 37 31 264** bekannt. Bei dieser bekannten Anordnung sind zwei einander gegenüberliegende Abdeckkappen vorgesehen, die mit einander zugewandten, das Kupplungsgehäuse untergreifenden Bügelansätzen versehen sind, die ineinandersteckbar und mittels einer Schraube miteinander verbindbar sind. Die Schraube ist durch eine seitliche, mittels eines einsetzbaren Zylinderschlosses verschließbare Aussparung eines Bügelansatzes einführbar. Hiermit wird nur erreicht, daß die Kupplung nicht von der Zugdeichsel abgeschraubt werden kann. Die genannte **DE-C 37 31 264** enthält zwar auch einen Hinweis auf eine zusätzliche, in das Kupplungsmaul eingreifende Einrichtung. Die Verwendung einer zusätzlichen Einrichtung erweist sich jedoch als umständlich. Ein besonderer Nachteil ist jedoch darin zu sehen, daß eine in das Kupplungsmaul eingreifende Einrichtung nur bei abgestelltem, nicht aber bei angehängtem Anhänger verwendbar ist. Die genannte Vorveröffentlichung beschreibt ferner die Möglichkeit, das Zylinderschloß in einen einem mittels des Handhebels verschiebbaren Bolzen zugeordneten Gleitschlitz einzusetzen. Hierdurch wird zwar der Kupplungsmechanismus außerhalb des Kupplungsmauls blockiert. In diesem Falle wird jedoch der Zugang zu der die beiden Abdeckkappen zusammenhaltenden Schraube freigegeben, so daß diese gelöst werden kann. Die aus der **DE-C 37 31 264** entnehmbare Lehre erweist sich demnach insgesamt als umständlich und nicht zuverlässig genug.

Hiervon ausgehend ist es daher die Aufgabe der vorliegenden Erfindung, eine Vorrichtung gattungsgemäßer Art mit einfachen und kostengünstigen Mitteln so zu verbessern, daß trotz einfacher Handhabung eine hohe Sicherheit im angehängten und abgehängten Zustand gewährleistet wird.

Diese Aufgabe wird erfindungsgemäß dadurch gelöst, daß am wenigstens vorgesehenen, einen Abdeckelement ein den Kupplungsmechanismus außerhalb seines Kupplungsmauls blockierendes Blockierelement angebracht ist, das zusammen mit dem Abdeckelement mittels des Schlosses entnahmesicher am Kupplungsgehäuse festlegbar ist.

Diese Maßnahmen stellen sicher, daß mittels ein- und desselben Schlosses gleichzeitig die ganze Kupplung gegen unbefugte Entfernung von der Deichsel sowie der Kupplungsmechanismus gegen unbefugte bzw. unbeabsichtigte Öffnung gesichert sind. Die erfindungsgemäßen Maßnahmen ergeben dementsprechend sowohl während der Fahrt als auch in Fahrpausen als auch bei abgehängtem und abgestelltem Anhänger eine hohe Sicherheit gegen Diebstahl. Mit den erfindungsgemäßen Maßnahmen werden daher die Nachteile der bekannten Anordnungen auf einfache und kostengünstige Weise vollständig vermieden.

Vorteilhafte Ausgestaltungen und zweckmäßige Fortbildungen der übergeordneten Maßnahmen sind in den Unteransprüchen angegeben.

Vorteilhaft kann das Abdeckelement als mit einer das zugeordnete Ende der Durchgangsschraubverbindung aufnehmenden Ausnehmung versehener, blockförmiger Schloßkörper ausgebildet sein, in den ein mit einem am zugeordneten Ende der Durchgangsschraubverbindung angebrachten Schloßgegenhalter in und außer Eingriff bringbares Schloß eingesetzt ist und der wenigstens ein Blockierelement trägt. Diese Maßnahmen ergeben eine besonders kompakte Ausgestaltung, die einseitig angesetzt werden kann. Das Blockierelement kann dabei zweckmäßig einfach als vom Schloßkörper abstehender, in einen Gleitschlitz des Kupplungsgehäuses eingreifender Sicherungsbolzen und/oder als zum Eingriff mit dem Handhebel bringbarer Bügel und/oder als in den Kupplungsmechanismus eingreifende Nase ausgebildet sein. Je nach dem, wie die Durchgangsschraubverbindung angeordnet ist, kann dabei die eine oder andere Ausführung Verwendung finden. Selbstverständlich wäre auch eine Kombination mehrerer Ausführungen vorgenannter Art denkbar.

In weiterer Fortbildung der übergeordneten Maßnahmen kann der Schloßgegenhalter als Hinterschneidung ausgebildet sein, die an die Durchgangsschraube oder vorzugsweise eine Mutter einer auf die Durchgangsschraube aufschraubbaren Kontermutterpaarung angeformt ist. Bei Verwendung der Durchgangsschraube als Träger des Schloßgegenhalters ergibt sich eine einteilige Ausbildung, so daß auch bei gelockerter Mutter die Schraube selbst in Stellung gehalten wird. Bei Verwendung einer Kontermutter als Träger des Schloßgegenhalters wird sichergestellt, daß keine Spezialschraube benötigt wird. Es ist lediglich eine Mutter gegen eine Spezialmutter auszutauschen, was die Nachrüstung erleichtert.

Eine weitere, besonders zu bevorzugende Maßnahme kann darin bestehen, daß zwei einander gegenüberliegende Abdeckkappen vorgesehen sind, die durch eine die beiden Seitenflanken des Kupplungsgehäuses überbrückende, mittels des Schlosses am Kupplungsgehäuse verriegelbaren Brücke miteinander verbindbar sind, welche das Blockierelement enthält. Diese Ausführung erfordert in vorteilhafter Weise keinerlei baulichen Eingriff in eine vorhandene Verschraubung des Kupplungsgehäuses mit der Deichsel.

Zweckmäßig kann hierbei die Brücke als Blockierelement in Form eines das Kupplungsgehäuse vorzugsweise im Bereich der Gleitschlitze durchgreifenden Stifts ausgebildet sein, der einerseits mit einem festen Anschlag versehen ist und andererseits einen Schloßgegenhalter in Form einer Hinterschneidung trägt, der zum Eingriff mit einem das Schloß enthaltenden und mittels dieses am Schloßgegenhalter verriegelbaren Schloßkörper bringbar ist. Dies ergibt eine besonders kompakte Bauweise. Dadurch, daß der den Schloßgegenhalter tragende Stift das Kupplungsgehäuse durchgreift, ergeben sich in vorteilhafter Weise wenig Angriffsflächen.

Weitere vorteilhafte Ausgestaltungen und zweckmäßige Fortbildungen der übergeordneten Maßnahmen ergeben sich aus den restlichen Unteransprüchen in Verbindung mit der nachstehenden Beispielsbeschreibung.

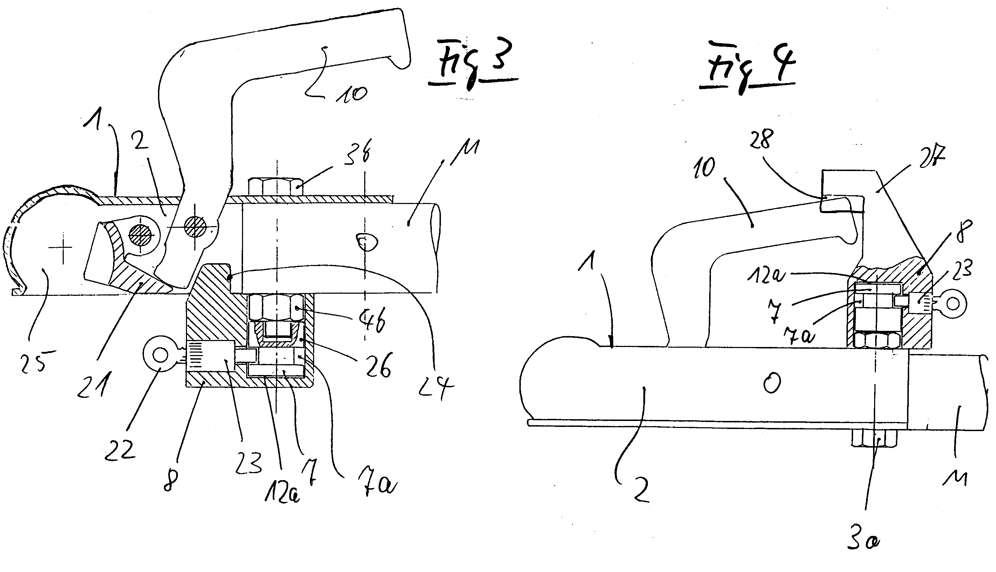

Nachstehend werden einige besonders bevorzugte Ausführungsbeispiele der Erfindung anhand der Zeichnung näher erläutert. Hierbei zeigen:
**Figur 1**
   Eine Explosionsdarstellung eines Beispiels mit einseitig ansetzbarem Schloßkörper, von dem ein Blockierstift absteht,
**Figur 2**
   eine perspektivische Ansicht des Schloßkörpers von der Innenseite her,
**Figur 3**
   eine Schnittdarstellung eines Ausführungsbeipiels mit einseitig ansetzbarem Schloßkörper, von dem eine Blockiernase absteht,
**Figur 4**
   eine ähnliche Ausführung wie Figur 3 mit abstehendem Blockierbügel und
**Figur 5**
   eine Explosionsdarstellung eines Ausführungsbeispiels mit zwei einander gegenüberliegenden Abdeckkappen, die durch einen Blockierstift miteinander verbunden sind.

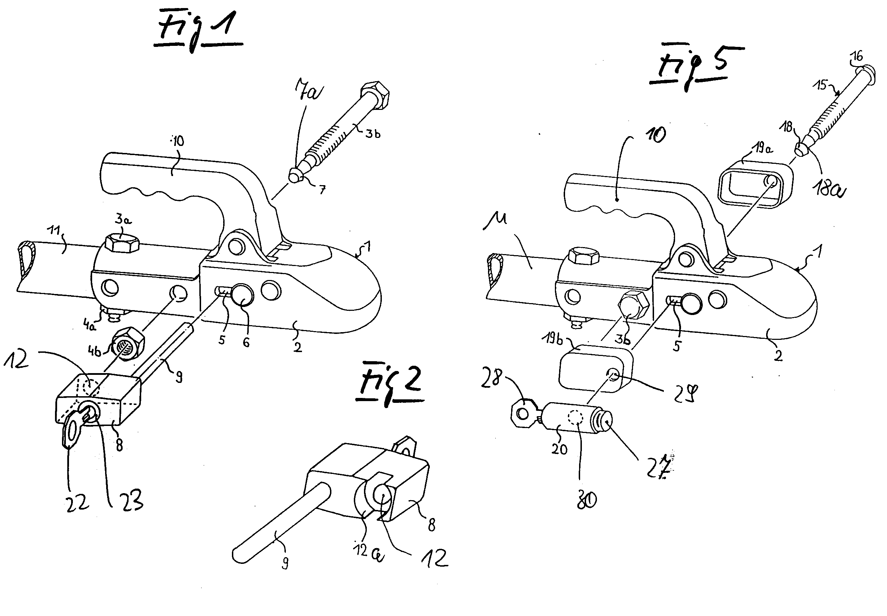

Der Aufbau und die Wirkungsweise einer Zugkugelkupplung eines Kfz-Anhängers sind an sich bekannt und bedürfen daher im vorliegenden Zusammenhang keiner eingehenderen Erläuterung mehr. Die den Zeichnungen zugrundeliegende, als ganzes mit 1 bezeichnete Zugkugelkupplung besteht in an sich bekannter Weise, wie in den Figuren 1 und 3 bis 5 anschaulich dargestellt ist, aus einem halbschalenförmigen Kupplungsgehäuse 2, das durch zwei in der Regel um 90° gegeneinander versetzte Druchgangsschrauben 3a, 3b, auf die jeweils eine Mutteranordnung 4a, 4b aufgeschraubt ist, lösbar an einer Zugdeichsel 11 befestigt ist. Die Mutteranordnung 4a, 4b kann jeweils aus einer mittels eines Sprengrings gesicherten Mutter oder aus einer Kontermutteranordnung mit zwei einander zugeordneten Kontermuttern bestehen. Das Kupplungsgehäuse 2 enthält, wie am besten aus Figur 3 erkennbar ist, einen mittels eines nach oben abstehenden, einen nach hinten gebogenen Griff aufweisenden Handhebels 10 betätigbaren Kupplungsmechanismus 21.

Der grundsätzliche Aufbau der den Figuren 1 bis 5 zugrundeliegenden Zugkugelkupplungen ist gleich, so daß für gleichbleibende Teile in der folgenden Beschreibung auch gleiche Bezugszeichen Verwendung finden. Bei der Ausführung gemäß Figuren 1 und 5 besitzt der Kupplungsmechanismus einen mittels des Handhebels 10 verschiebbaren Querbolzen 6, der mit seinen Enden in jeweils einen Gleitschlitz 5 in den beiden Seitenwänden des Kupplungsgehäuses 2 eingreift. Die den Figuren 1 und 5 zugrundeliegende, vordere Position des Querbolzens 6 entspricht der Ankuppelstellung, d.h. einer Stellung, in der das Kupplungsmaul der Zugkugelkupplung 1 gegen Ein- bzw. Ausführen einer zugeordneten Zugkugel gesperrt ist. In der Abkuppelstellung, in der eine Zugkugel in das Kupplungsmaul ein- bzw. ausgeführt werden kann, befindet sich der Querbolzen 6 in einer hinteren Position.

Bei der Ausführung gemäß Figur 1 ist eine der hier um 90° gegeneinander versetzten Durchgangsschrauben 3a, 3b, hier die vordere, dem Kupplungsmechanismus benachbarte, mit horizontaler Achse angeordnete Durchgangsschraube 3b, mit einem angesetzten Zapfen 7 versehen, der eine Hinterschneidung 7a aufweist, die als umlaufende Nut ausgebildet sein kann. Der Zapfen 7 steht in der montierten Stellung über die auf die Schraube 3b aufschraubbare Mutter 4b vor. Zur Sicherung der Schraube 3b ist auf den vorstehenden Zapfen 7 ein blockförmiger Schloßkörper 8 aufsteckbar, der mit einer Ausnehmung 12 versehen ist, in die der Zapfen 7 eingreifen kann. Die Ausnehmung 12 ist, wie am besten aus Figur 2 erkennbar ist, als Stufenbohrung ausgebildet, deren äußere Stufe einen solchen Durchmesser aufweist, daß sich eine erweiterte Kammer 12a ergibt, in der die Mutter 4b ganz oder teilweise, jedenfalls in von außen nicht mittels eines Werkzeugs betätigbarer Weise aufgenommen wird. In den Schloßkörper 8 ist ein mittels eines Schlüssels 22 absperrbares Schloß 23, hier in Form eines Zylinderschlosses, eingesetzt, dessen mittels des Schlüssels 22 betätigbarer Riegel im angesetzten Zustand zum Eingriff mit der Hinterschneidung 7a des Zapfens 7 bringbar ist.

Der zweckmäßig aus gehärtetem Stahl etc. bestehende, blockförmige Schloßkörper 8 bildet mit seiner Aussparung 12a eine Abdeckung für die der zu sichernden Schraube 3b zugeordnete Mutter 4b. Da die Schraube 3b mittels des Schlosses 23 gleichzeitig gegen Zurückziehen gesichert ist, ergibt sich hierdurch eine zuverlässige Sicherung der Schraubverbindung zwischen Kupplungsgehäuse 2 und Deichsel 11 gegen unbeabsichtigtes bzw. unberechtigtes Lösen. Die hier mit dem Zapfen 7 versehene Schraube 3b stellt eine Spezialschraube dar, die einmal gegen eine vorhandene Schraube ausgetauscht wird und dann an der Deichsel 11 verbleibt.

Zur Bewerkstelligung einer zuverlässigen Diebstahlssicherung muß neben der Sicherung der Schraubverbindung auch der Kupplungsmechanismus in seiner Bewegbarkeit zumindest so weit eingeschränkt werden, daß ein An- bzw. Abkuppeln nicht möglich ist. Um dies zu bewerkstelligen ist der Schloßkörper 8 bei der Anordnung gemaß Figuren 1 und 2 mit einem abstehenden Blockierelement, hier in Form eines Blockierstifts 9 versehen, der so angeordnet ist, daß er bei angesetztem Schloßkörper 8 in den benachbarten Gleitschlitz 5 eingreift. Im dargestellten Beispiel ist der Blockierstift so lang, daß er die einander gegenüberliegenden Gleitschlitze 5 durchgreift. Der Blockierstift verhindert, daß der Bolzen 6 in seine hintere Position gelangen kann. Hierdurch wird daher die Beweglichkeit des Kupplungsmechanismusses soweit eingeschränkt, daß das Kupplungsmaul bei Betätigung des Handhebels 10 nicht freigegeben wird. Diese Blockierung erfolgt hier außerhalb des Kupplungsmauls, so daß ein Einsatz auch im angekuppelten Zustand möglich ist, wodurch sichergestellt wird, daß die Kupplung sich nicht selbsttätig lösen kann und nicht unbefugterweise geöffnet werden kann. Der Blockierstift 9 kann wie der Schloßkörper 8 aus gehärtetem Stahl etc. bestehen. Dasselbe gilt für die hier den hinterschnittenen Zapfen 7 tragende Schraube 3b. Hierdurch wird auch eine hohe Schlag- und Stoßsicherheit erreicht.

Dadurch, daß eine Durchgangsschraube 3b anstelle ihres Gewindeüberstands mit einem Schloßgegenhalter, hier einem hinterschnittenen Zapfen 7 versehen ist, der in einen Schloßkörper 8 eingreift und hiergegen verriegelbar ist, und daß der Schloßkörper 8 ein außerhalb des Kupplungsmauls zum Eingriff mit dem Kupplungsmechanismus bringbares Blockierelement, hier in Form des die Gleitschlitze 5 durchgreifenden Blockierstifts 9 aufweist, werden gleichzeitig mittels einer einheitlich handhabbaren Vorrichtung die der Schraube 3b zugeordnete Mutter 4b gegen unbefugtes Lösen gesichert und der Kupplungsmechanismus gegen unbefugtes An- bzw. Abkuppeln blockiert. Im angekuppelten Zustand befindet sich der Bolzen 6 bereits in der gewünschten Stellung, in der der Blockierstift 9 zum Einsatz gebracht werden kann. Im abgekuppelten Zustand ist der Bolzen 6 einfach in die Position zu bringen, die dem angekuppelten Zustand entspricht. Dies geschieht je nach Kupplungstyp durch einfachen Handgriff an der beweglichen Schale des Kupplungsmauls und/oder am Handhebel 10. Dadurch wird erreicht, daß unabhängig vom Kupplungszustand der Blockierstift 9 immer durch dieselbe Öffnung im Kupplungsgehäuse geführt werden kann.

Bei Kupplungen, die nicht von Hause aus mit Gleitschlitzen der bei 5 angedeuteten Art versehen sind, könnte einfach eine geeignete, dem Blockierstift 9 zugeordnete Bohrung angebracht werden. Es ist aber auch ohne weiteres möglich, das Blockierelement so auszubilden, daß keine Gleitschlitze bzw. diesen entsprechende Ausnehmungen benötigt werden. Anordnungen dieser Art liegen den Figuren 3 und 4 zugrunde. Bei der Anordnung gemäß Figur 3 ist der Schloßkörper 8 mit einer abstehenden Nase 24 versehen, die hier von unten in den Kupplungsmechanismus eingreift und dessen Beweglichkeit in der erwünschten Weise einschränkt. Im dargestellten Beispiel hält die Nase 24 den Hebel 10 in seiner Sperrstellung. Hierdurch ist daher das Kupplungsmaul 25 gegen An- bzw. Abkuppeln blockiert, ohne daß in dieses selbst eingegriffen wird, wie Figur 3 anschaulich zeigt. Eine Anordnung hier vorliegender Art mit von unten in den Kupplungsmechanismus eingreifendem Blockierelement empfiehlt sich vor allem dann, wenn der Schloßkörper 8 von der Deichselunterseite her ansetzbar ist. Dementsprechend ist im vorliegenden Fall die kupplungsmaulnahe Durchgangsschraube 3b mit vertikaler Achse angeordnet.

Die genannte Durchgangsschraube 3b kann, wie bei der Ausführung gemäß Figur 1 zur Bildung eines Schloßgegenhalters mit einem angeformten, hinterschnittenen Zapfen versehen sein, der die zugeordnete Mutter 4b überragt. Im dargestellten Beispiel ist der Schloßgegenhalter an eine auf den Gewindeüberstand der Schraube 3b aufschraubbare, mit der serienmäßig bereits vorhandenen Mutter 4b zusammenwirkende Kontermutter 26 angeformt. Diese ist hier mit einem hinterschnittenen Zapfen 7 versehen, in dessen Hinterschneidung 7a der Riegel des in den blockförmigen Schloßkörper 8 eingesetzten, mittels eines Schlüssels 22 betätigbaren Schlosses 23 zum Eingriff bringbar ist. Eine Ausführung dieser Art ermöglicht vergleichsweise große Zapfenquerschnitte und damit eine vergleichsweise große Festigkeit. Da die Kontermutteranordnung in sich selbsthemmend ist und dementsprechend ohne vorheriges Lösen nicht von der Schraube 3b abgedreht werden kann, ergibt sich hierdurch dieselbe Sicherung der Schraube 3b wie bei direkt an diese angeformtem Schloßgegenhalter. Der Schloßkörper 8 ist mit einer die Mutter 4b und die dieser zugeordnete Kontermutter 26 aufnehmenden, als Sackloch ausgebildeten Ausnehmung 12a versehen, so daß bei angesetztem Schloßkörper 8 beide Muttern abgedeckt und dementsprechend nicht mittels eines Werkzeugs erreichbar sind. Die Tiefe der genannten Ausnehmung des Schloßkörpers 8 ist in jedem Fall so, daß dieser im angesetzten Zustand satt am Kupplungsgehäuse bzw. der Deichsel anliegt und so auch gegen Abhebeln gut gesichert ist. Im dargestellten Beispiel ist die deichselferne Kontermutter 26a mit der Hinterschneidung 7a versehen. Selbstverständlich könnte natürlich auch die deichselnahe Mutter 4b mit einer dem Schloß 23 zugeordneten Hinterschneidung versehen und dann durch eine nicht hinterschnittene Kontermutter gesichert sein.

Bei der Ausführung gemäß Figur 4 ist der Schloßkörper 8 ebenfalls einer mit vertikaler Achse angeordneten Durchgangsschraube, hier der kupplungsmaulfernen Durchgangsschraube 3a, zugeordnet, die hier mit unten liegendem Schraubenkopf und oben liegender Mutternanordnung angeordnet ist, so daß der Schloßkörper 8 von oben aufgesetzt wird. Bei einer Anordnung dieser Art empfiehlt es sich, wenn das Blockierelement als nach oben abstehender, mit dem Handhebel 10 zum Eingriff bringbarer Bügel 27 ausgebildet ist. Dieser besitzt hier eine den Handhebel 10 in der Sperrstellung übergreifende Kröpfung, die mit einer dem Handhebel 10 zugeordneten Eingriffsnut 28 versehen ist, so daß der gesamte Schloßkörper 8 gegenüber dem Handhebel 10 formschlüssig gegen Verdrehen gesichert ist. Zum selben Zweck könnte natürlich der Bügel 27 auch so ausgebildet sein, daß er mit seinem oberen Ende in eine zugeordnete Ausnehmung des Handhebels 10 eingreift bzw. diese durchgreift. Eine Verdrehsicherung oben genannter Art und damit die Garantie, daß das Blockierelement auch in der gewünschten Blockierstellung bleibt, wird auch bei den Ausführungen gemäß Figuren 1 und 3 durch den dort vorgesehenen formschlüssigen Eingriff des Blockierelements in das Kupplungsgehäuse bzw. Elemente des Kupplungsmechanismusses erreicht.

Bezüglich der Ausgestaltung des Schloßgegenhalters entspricht die Anordnung gemäß Figur 4 der Anordnung gemäß Figur 3, so daß auf obige Beschreibung Bezug genommen werden kann. Auch die im obigen Zusammenhang geschilderten Varianten können ohne weiteres zur Anwendung kommen. In diesem Zusammenhang ist auch zu erwähnen, daß ein Schloßkörper selbstverständlich auch mit mehr als einem Blockierelement versehen sein kann. So wäre es beispielsweise ohne weiteres möglich, zusätzlich zu den den Figuren 3 bzw. 4 zugrundeliegenden Blockierelementen in Form von Nase 24 bzw. Bügel 27 auch noch einen Blockierstift der den Figuren 1 und 2 zugrundeliegenden Art vorzusehen, wobei die Anordnung des Schloßkörpers seitlich, unten oder oben entsprechend den Verhältnissen des Einzelfalls gewählt werden kann.

In den dargestellten Beispielen ist der Schloßkörper 8 mit einem eingebauten Zylinderschloß 23 versehen. Es wäre aber auch denkbar, ein außerhalb des Schloßkörpers 8 angeordnetes Vorhängeschloß oder Steckschloß zu verwenden. Hierzu könnte beispielsweise der Schloßgegenhalter als Querbohrung oder Öse ausgebildet sein, in die ein Steckschloß oder der Bügel eines Vorhängeschlosses einsetzbar ist. Eine Anordnung dieser Art kann dann zu bevorzugen sein, wenn der Schloßkörper 8 als Gußteil oder aus einem Vierkant-, Flach- oder Rundstahl bestehender Biegeformling ausgebildet ist.

Bei der Ausführung gemäß Figur 5 sind die einer der Durchgangsschrauben 3a, 3b, hier der vorderen, horizontal angeordneten Durchgangsschraube 3b, zugeordnete Endabdeckung sowie der Schloßkörper und das Blockierelement separat voneinander ausgebildet. Hierzu sind im dargestellten Beispiel Zwei einander gegenüberliegende, dem Schraubenkopf und der gegenüberliegenden Mutteranordnung zugeordnete Abdeckkappen 19a, 19b vorgesehen, die in der Montagestellung durch eine Brücke miteinander verbunden werden, die von einer Seitenflanke des Kupplungsgehäuses 2 zur anderen reicht und die am Kupplungsgehäuse 2 festgelegt und mittels eines in einem Schloßkörper 20 vorgesehenen mittels eines Schlüssels 28 betätigbaren Schlosses 27 gegenüber dem Kupplungsgehäuse 2 verriegelbar ist. Die genannte Brücke ist hier einfach als die beiden Abdeckkappen 19a, 19b sowie das Kupplungsgehäuse 2 durchgreifender, den Kupplungsmechanismus in der erwünschten Weise in seiner Beweglichkeit zumindest einschränkender Blockierstift 15 ausgebildet. Die Abdeckkappen 19a, 19b sind hierzu mit entsprechenden Durchsteckausnehmungen 29 versehen. Im dargestellten Beispiel sind im Bereich der Seitenflanken des Kupplungsgehäuses 2 Gleitschlitze 5 vorgesehen, durch welche der Blockierstift 15 durchgesteckt werden kann. Sofern dies nicht der Fall ist, kann eine entsprechende Bohrung vorgesehen werden. Es wäre aber auch denkbar, in einem derartigen Falle die als Blockierelement fungierende Brücke einfach als das Kupplungsgehäuse 2 über bzw. untergreifende, 2-teilige Bügelanordnung mit geeignetem Blockieransatz, beispielsweise in Form einer von unten in den Kupplungsmechanismus eingreifenden Nase und/oder einer mit dem Handhebel 10 zum Eingriff kommenden Bügelanordnung etc. auszubilden. Der hier vorgesehene Blockierstift 15 ist an einem Ende mit einem kopfförmigen Anschlag 16 versehen und trägt am anderen Ende einen Schloßgegenhalter, hier in Form eines angeformten, hinterschnittenen Zapfens 18, in dessen Hinterschneidung 18a der Riegel des Schlosses 27 einlegbar ist. Selbstverständlich wäre es auch hier denkbar, den Schloßgegenhalter an eine auf den dann als Schraube ausgebildeten Blockierstift 15 aufschraubbare Mutter bzw. Kontermutter anzuformen.

Der Schloßkörper 20 ist mit einer dem stiftseitigen Schloßgegenhalter zugeordneten Einsteckausnehmung 30 versehen. In der aufgesteckten und abgesperrten Stellung fungiert der Schloßkörper 20 praktisch als dem Anschlagkopf 16 gegenüberliegender Anschlagkopf. Insgesamt ergibt sich dementsprechend eine zweiteilige Brückenanordnung, hier in Form des mit dem Anschlag 16 versehenen Blockierstifts 15 und des auf diesen aufsteckbaren Schloßkörpers 20 mit Schloß 27. Es wäre auch ohne weiteres denkbar, die beiden Abdeckkappen 19a, 19b fest mit den beiden Brückenteilen in Form des Blockierstifts 15 und des Schloßkörpers 20 zu verbinden. Dasselbe gilt selbstverständlich auch für Ausführungen, bei denen anstelle des hier vorgesehenen Blockierstifts 15 eine das Kupplungsgehäuse 2 über- bzw. untergreifende, 2-teilige Bügelanordnung vorgesehen ist. Auch in diesem Falle ist einerseits ein Schloßgegenhalter und andererseits ein Schloß vorzusehen, so daß die beiden Teile in absperrbarer Weise aneinander festlegbar sind. Zur Blockierung des Kupplungsmechanismusses könnten dabei eine oder beide Hälften mit einem Blockierstift der der Figur 1 entnehmbaren Art und/oder einer Nase der Figur 3 entnehmbaren Art und/oder einem Bügelansatz der der Figur 4 entnehmbaren Art versehen sein.

Bei dem der Figur 5 zugrundeliegenden Beispiel sind zwei einander gegenüberliegende Abdeckkappen 19a, 19b vorgesehen. In einfachen Fällen reicht es jedoch, wenn lediglich dem Kopf der betreffenden Schraube 3b eine Abdeckkappe zugeordnet ist, da hierbei diese Schraube beispielsweise auch bei gelöster Mutter nicht entfernt werden kann. Wichtig ist jedoch, daß die Abdeckung mittels einer die beiden Seitenflanken des Kupplungsgehäuses 2 überbrückenden, mittels des Schlosses 27 am Kupplungsgehäuse 2 verriegelbaren, 2-teiligen Brücke, welche wenigstens ein Blockierelement zum Blockieren des Kupplungsmechanismusses enthält, in Stellung haltbar ist. Hierdurch wird sowohl der Kupplungsmechanismus blockiert als auch eine Durchgangsschraube gegen unbefugtes Abnehmen gesichert. Im dargestellten Beispiel wird dies dadurch erreicht, daß der mit Hilfe des Schlosses 27 bare Blockierstift 15 durch das Kupplungsgehäuse 2 durchgeführt wird und daß am Blockierstift 15 wenigstens eine dem Schraubenkopf zugeordnete Abdeckkappe 19b aufgenommen ist.

## Patentansprüche

1. Vorrichtung zur Diebstahlsicherung von Kfz-Anhängern, die mit einer am Ende einer Zugdeichsel (11) mittels wenigstens einer Durchgangsschraubverbindung (3a, 3b; 4a, 4b) befestigten, einen mittels eines schwenkbaren Handhebels (10) betätigbaren Kupplungsmechanismus aufweisenden Zugkugelkupplung (1) an ein Zugfahrzeug anhängbar sind, wobei wenigstens ein Ende der Durchgangsschraubverbindung in einem diese gegen Entfernbarkeit von der Deichsel (11) sichernden Abdeckelement (8, 19a, 19b) aufnehmbar ist, das mittels eines absperrbaren Schlosses (23, 27) entnahmesicher am Kupplungsgehäuse (2) festlegbar und bei geöffnetem Schloß entnehmbar ist, und wobei der Kupplungsmechanismus zumindest teilweise blockierbar ist, **dadurch gekennzeichnet**, **daß** am wenigstens vorgesehenen, einen Abdeckelement (8, 19a, 19b) ein den Kupplungsmechanismus außerhalb seines Kupplungsmauls (25) blockierendes Blockierelement (9, 24, 27, 15) angebracht ist, das zusammen mit dem Abdeckelement (8, 19a, 19b) mittels des Schlosses 27) entnahmesicher am Kupplungsgehäuse (2) festlegbar ist.

2. Vorrichtung nach Anspruch 1, **dadurch gekennzeichnet**, **daß** das Abdeckelement (8, 19a, 19b) als mit einer das zugeordnete Ende der Durchgangsschraubverbindung aufnehmenden Ausnehmung (12, 12a) versehener, blockförmiger Schloßkörper (8) ausgebildet ist, in den ein mit einem am zugeordneten Ende der Durchgangsschraubverbindung angebrachten Schloßgegenhalter (7, 7a) in und außer Eingriff bringbares Schloß (23) eingesetzt ist und der wenigstens ein Blockierelement (9, 24, 27) trägt.

3. Vorrichtung nach Anspruch 2, **dadurch gekennzeichnet, daß** der Schloßgegenhalter (7, 7a) im Bereich des mutternseitigen Endes der zugeordneten Durchgangsschraube (3a, 3b) vorgesehen ist.

4. Vorrichtung nach einem der vorhergehenden Ansprüche, **dadurch gekennzeichnet**, **daß** der Schloßgegenhalter (7) eine Hinterschneidung (7a) aufweist, die an die zugeordnete Durchgangsschraube (3a, 3b) oder vorzugsweise eine Mutter (26) einer auf die Durchgangsschraube (3a, 3b) aufschraubbaren Kontermutteranordnung angeformt ist.

5. Vorrichtung nach einem der vorhergehenden Ansprüche, **dadurch gekennzeichnet, daß** das Blockierelement als vom Schloßkörper (8) abstehender, in eine Ausnehmung des Kupplungsgehäuses (2), vorzugsweise in Form eines einem mittels des Handhebels (10) verschiebbaren Bolzen (6) zugeordneten Gleitschlitz (5) eingreifender Blockierstift (9) und/oder als mit dem Handhebel (10) zum Eingriff bringbarer Bügel (27) und/oder als in den Kupplungsmechanismus von unten eingreifende Nase (24) ausgebildet ist.

6. Vorrichtung nach Anspruch 1, **dadurch gekennzeichnet**, **daß** als Abdeckelement wenigstens eine ein zugeordnetes Ende der Durchgangsschraubverbindung (3b) übergreifende Abdeckkappe (19a, 19b) vorgesehen ist, die mittels einer die beiden Seitenflanken des Kupplungsgehäuses (2) überbrückenden, mittels des Schlosses (27) am Kupplungsgehäuse (2) verriegelbaren Brücke, welche das Blockierelement (15) enthält, in Stellung haltbar ist.

7. Vorrichtung nach Anspruch 6, **dadurch gekennzeichnet**, **daß** zwei einander gegenüberliegende Abdeckkappen (19a, 19b) vorgesehen sind, welche durch die Brücke miteinander verbindbar sind.

8. Vorrichtung nach Anspruch 6 oder 7, **dadurch gekennzeichnet, daß** die Brücke als Blockierelement in Form eines das Kupplungsgehäuse (2) vorzugsweise im Bereich eines Gleitschlitzes (5) durchgreifenden Blockierstifts (15) ausgebildet ist, der einerseits mit einem festen Anschlag (16) versehen ist und andererseits einen Schloßgegenhalter (18) mit einer Hinterschneidung (18a) trägt, wobei der Schloßgegenhalter (18) zum Eingriff mit einem das Schloß (27) enthaltenden und mittels dieses mit dem Schloßgegenhalter (18) verriegelbaren Schloßkörper (20) bringbar ist.

9. Vorrichtung nach Anspruch 8, **dadurch gekennzeichnet, daß** der Blockierstift (15) als Schraube ausgebildet ist, auf die eine Kontermutteranordnung aufschraubbar ist, wobei eine der Muttern mit einer Hinterschneidung versehen ist.

10. Vorrichtung nach Anspruch 6 oder 7, **dadurch gekennzeichnet, daß** die Brücke mittels eines Schlosses (27) gegeneinander verriegelbare, das Kupplungsgehäuse (2) über- bzw. untergreifende Hälften aufweist, von denen wenigstens eine eine Abdeckkappe (19a, 19b) und wenigstens eine ein Blockierelement enthält.

## Claims

1. Apparatus for preventing the theft of vehicle trailers, which are attachable to a towing vehicle by a towing ball coupling (1), which is mounted on the end of a towbar (11) by means of at least one through-screw connection (3a, 3b; 4a, 4b) and has a coupling mechanism actuatable by means of a pivotable manual lever (10), at least one end of the through-screw connection being able to be accommodated in a covering element (8, 19a, 19b), which prevents said connection from being removable from the towbar (11), said covering element being irremovably securable on the coupling housing (2) by means of a closable lock (23, 27) and being removable when the lock is opened, and the coupling mechanism being at least partially lockable, characterised in that a locking element (9, 24, 27, 15), which locks the coupling mechanism externally of its coupling mouth (25), is mounted on at least one of the covering elements (8, 19a, 19b) provided and is irremovably securable on the coupling housing (2), together with the covering element (8, 19a, 19b), by means of the lock (27).

2. Apparatus according to claim 1, characterised in that the covering element (8, 19a, 19b) is configured as a block-shaped lock body (8), which is provided with a recess (12, 12a) accommodating the associated end of the through-screw connection, a lock (23) being inserted into said lock body and being engageable in and disengageable from a lock counter-holder (7, 7a) mounted on the associated end of the through-screw connection, and said lock body being provided with at least one locking element (9, 24, 27).

3. Apparatus according to claim 2, characterised in that the lock counter-holder (7, 7a) is provided in the region of the nut end of the associated through-screw (3a, 3b).

4. Apparatus according to one of the preceding claims, characterised in that the lock counter-holder (7) has an undercut portion (7a), which is shaped to fit on the associated through-screw (3a, 3b) or preferably on a nut (26) of a counter-nut arrangement which can be screwed onto the through-screw (3a, 3b).

5. Apparatus according to one of the preceding claims, characterised in that the locking element is configured as locking pin (9), which protrudes from the lock body (8) and engages in a recess in the coupling housing (2), preferably in the form of a slide slot (5) associated with a bolt (6), which is displaceable by means of the manual lever (10), and/or as clamp (27), which is engageable with the manual lever (10), and/or as projection member (24), which engages in the coupling mechanism from below.

6. Apparatus according to claim 1, characterised in that at least one cover cap (19a, 19b) is provided as the covering element, said cap overlapping an associated end of the through-screw connection (3b) and being retainable in position by means of a bridging member, which bridges the two lateral walls of the coupling housing (2) and is lockable on the coupling housing (2) by means of the lock (27), said bridging member containing the locking element (15).

7. Apparatus according to claim 6, characterised in that two oppositely situated cover caps (19a, 19b) are provided, which are interconnectable by means of the bridging member.

8. Apparatus according to claim 6 or 7, characterised in that the bridging member is configured as the locking element in the form of a locking pin (15), which extends through the coupling housing (2), preferably in the region of a slide slot (5), said pin being provided at one end with a fixed stop member (16) and having at the other end a lock counter-holder (18) with an undercut portion (18a), the lock counter-holder (18) being engageable with a lock body (20), which contains the lock (27) and is lockable with the lock counter-holder (18) by means of said lock.

9. Apparatus according to claim 8, characterised in that the locking pin (15) is configured as the screw, onto which a counter-nut arrangement is screwable, one of the nuts being provided with an undercut portion.

10. Apparatus according to claim 6 or 7, characterised in that the bridging member has halves, which are lockable relative to one another by means of a lock (27) and engage above or below the coupling housing (2), at least one of the halves containing a cover cap (19a, 19b) and at least one of the halves containing a locking element.

## Revendications

1. Dispositif de protection antivol pour des remorques de véhicules automobiles qui peuvent être accrochées à un véhicule tracteur à l'aide d'une attache à bille (1) fixée à l'extrémité d'un timon de traction (11) au moyen d'au moins un assemblage par boulons traversants (3a, 3b; 4a, 4b) et présentant un mécanisme d'accouplement qui peut être actionné au moyen d'un levier manuel pivotant (10), dans lequel au moins une extrémité de l'assemblage par boulons traversants peut venir se loger dans un élément de recouvrement (8, 19a, 19b) pour le protéger contre le fait de pouvoir le démonter du timon (11), qui peut être fixé à la boîte d'accouplement (2) d'une manière s'opposant au retrait, au moyen d'une serrure (23, 27) qui peut être verrouillée, et peut en être retiré lorsqu'on ouvre la serrure, et dans lequel le mécanisme d'accouplement peut être bloqué au moins partiellement, caractérisé en ce qu'on applique, sur au moins un élément de recouvrement prévu (8, 19a, 19b), un élément de blocage (9, 24, 27, 15) bloquant le mécanisme d'accouplement à l'extérieur de sa mâchoire d'accouplement (25), qui peut être fixé conjointement avec l'élément de recouvrement (8, 19a, 19b) au moyen de la serrure (27) d'une manière résistant au retrait, sur la boîte d'accouplement (2).

2. Dispositif selon la revendication 1, caractérisé en ce que l'élément de recouvrement (8, 19a, 19b) est réalisé sous forme d'un corps de serrure (8) en forme de bloc muni d'un évidement (12, 12a) dans lequel vient se loger l'extrémité correspondante de l'assemblage à boulons traversants, dans lequel est insérée une serrure (23) qui peut être amenée en et hors de contact avec une butée de serrure (7, 7a) appliquée sur l'extrémité correspondante de l'assemblage à boutons traversants, et qui porte au moins un élément de blocage (9, 24, 27).

3. Dispositif selon la revendication 2, caractérisé en ce que la butée de serrure (7, 7a) est prévue dans la zone de l'extrémité du bouton traversant correspondant (3a, 3b), côté écrou.

4. Dispositif selon l'une quelconque des revendications précédentes, caractérisé en ce que la butée de serrure (7) présente une contre-dépouille (7a) qui est façonnée contre le bouton traversant correspondant (3a, 3b) ou de préférence contre un écrou (26) d'un agencement à contre-écrou qui peut venir se visser sur le bouton traversant (3a, 3b).

5. Dispositif selon l'une quelconque des revendications précédentes, caractérisé en ce que l'élément de blocage est réalisé sous forme d'une tige de blocage (9), faisant saillie par rapport au corps de serrure (8) et venant s'insérer dans un évidement de la boîte d'accouplement (2), de préférence sous la forme d'une fente de glissement (5) attribuée à un bouton (6) apte à coulisser au moyen du levier manuel (10) et/ou sous forme d'un étrier (27) qui peut être amené en engrènement avec le levier manuel (10) et/ou sous forme d'un nez (24) venant s'engrener par le bas dans le mécanisme d'accouplement.

6. Dispositif selon la revendication 1, caractérisé en ce qu'on prévoit, comme élément de recouvrement, au moins un boîtier de recouvrement (19a, 19b) saisissant par le haut une extrémité correspondante de l'assemblage à boutons traversants (3b) qui peut être maintenu en position au moyen d'un pont, qui contient l'élément de blocage (15), chevauchant les deux flancs latéraux de la boîte d'accouplement (2) et qui peut être verrouillé au moyen de la serrure (27) sur la boîte d'accouplement (2).

7. Dispositif selon la revendication 6, caractérisé en ce qu'on prévoit deux boîtiers de recouvrement (19a, 19b) opposés l'un à l'autre, qui peuvent être reliés l'un à l'autre par le pont.

8. Dispositif selon la revendication 6 ou 7, caractérisé en ce que le pont est réalisé en forme d'élément de blocage sous la forme d'une tige de blocage (15) traversant la boîte d'accouplement (2) de préférence dans la zone d'une fente de glissement (5), la tige, d'une part, étant munie d'une butée fixe (16) et, d'autre part, portant une butée de serrure (18) munie d'une contre-dépouille (18a), la butée de serrure (18) pouvant être amenée en contact avec un corps de serrure (20) contenant la serrure (27) et qui peut être verrouillé au moyen de ce dernier avec la butée de serrure (18).

9. Dispositif selon la revendication 8, caractérisé en ce que la tige de blocage (15) est réalisée en forme de bouton sur lequel peut venir se visser un agencement à contre-écrou, un des écrous étant muni d'une contre-dépouille.

10. Dispositif selon la revendication 6 ou 7, caractérisé en ce que le pont présente des moitiés saisissant la boîte d'accouplement (2) par le haut, respectivement par le bas, et qui peuvent être verrouillées mutuellement au moyen d'une serrure (27), dont au moins une contient un boîtier de recouvrement (19a, 19b) et dont au moins une contient un élément de blocage.
